# EUROPEAN PATENT SPECIFICATION

(11) **EP 2 630 341 B1**
(45) Date of publication and mention of the grant of the patent: **24.08.2016**
(21) Application number: 11764180.3
(22) Date of filing: 03.10.2011
(51) Int. Cl.: F01K 17/04, F01K 23/10

(54) **METHOD FOR OPERATING A COMBINED-CYCLE POWER PLANT WITH COGENERATION AND A COMBINED-CYCLE POWER PLANT FOR CARRYING OUT THE METHOD**
VERFAHREN ZUM BETRIEB EINES KOMBIKRAFTWERKS MIT KRAFT-WÄRME-KOPPLUNG SOWIE EIN KOMBIKRAFTWERK ZUR DURCHFÜHRUNG DES VERFAHRENS
PROCÉDÉ D'OPÉRATION D'UNE CENTRALE ÉLECTRIQUE À CYCLE COMBINÉ À COGÉNÉRATION ET CENTRALE ÉLECTRIQUE À CYCLE COMBINÉ RÉALISANT LE PROCÉDÉ

(30) Priority: 19.10.2010 EP 10188089
(43) Date of publication of application: 28.08.2013
(73) Proprietor: General Electric Technology GmbH, 5400 Baden (CH)
(72) Inventor: DROUX, Francois, CH-5452 Oberrohrdorf (CH); BRESCHI, Dario, Ugo, F-90170 Anjouey (FR); REYSER, Karl, 79790 Küssaberg (DE); ROFKA, Stefan, CH-5415 Nussbaumen (CH); WICK, Johannes, CH-5712 Beinwil am See (CH)
(74) Representative: General Electric Technology GmbH
(86) International application number: PCT/EP2011/067220
(87) International publication number: WO 2012/052277

(56) References cited:
- EP-A1- 1 908 733
- EP-A1- 1 921 281
- EP-A2- 0 949 406
- EP-A2- 1 701 006
- GB-A- 1 182 021

## Description

### TECHNICAL FIELD

The present invention relates to the field of power plant technology, and relates in particular to a method for operating a combined-cycle power plant with cogeneration according to the precharacterizing clause of claim 1. It also relates to a combined-cycle power plant for carrying out the method.

### PRIOR ART

Simultaneous generation of electricity and heat is required-in certain fields of operation of power plants. The two types of energy, which are generated, are not necessarily subject to the same demand profile from the connected consumers. The electricity production is traditionally governed by the requirements of the electrical grid system or, in some cases, by large local industrial consumers. The demand for heat is typically governed by the requirement of an industrial process or by the daily or seasonal fluctuations in a remote heat network or a drinking-water processing plant. With regard to the last-mentioned drinking water processing, countries with a large number of seawater desalination plants have major fluctuations in the demand for electrical power throughout the year, while the requirement for drinking water is largely constant over time.

A large proportion of the heat requirement is in general provided by extraction of steam from the steam turbine or from the main steam lines in a thermal power plant. When the steam is generated in a heat recovery steam generator (HRSG) in a combined-cycle power plant, its generation is linked directly to the load control of the gas turbine, and therefore cannot be completely decoupled from the electricity generation.

The design and operation of a gas turbine are normally concentrated on high efficiency during electricity generation. Although partial load operation of the gas turbine is possible within certain limits, it is, however, restricted by the hazardous-substance emissions, which rise when the load is low. During partial load operation, the combustion air and exhaust gas flows through the gas turbine are normally reduced, thus at the same time restricting the steam generation in the heat recovery steam generator which follows downstream.

In the past, various operating methods have been proposed for a combined-cycle power plant when the electricity demand is low and there is a high heat requirement (such as that which occurs when sea water is vaporized in sea-water desalination plants which are operated using steam):
One known option for controlling low electricity production is to restrict the inlet valves of the steam turbine, or even to close them completely, and to pass the excess steam to a water-cooled or air-cooled condenser, bypassing the turbine.

Another known option for maximizing the steam generation independently of the load on the gas turbine is to provide a fan in order to provide the necessary additional air, which is required for large supplementary firing in the heat recovery steam generator.

One very simple solution is to provide an auxiliary boiler, which generates the steam for the consumers, in order to allow the gas turbines to be shut down independently thereof.

If the power plant has a plurality of gas turbine units, some of the units can be switched off in order to reduce the electricity generation, if the supplementary firing in the heat recovery steam generator is overdesigned such that the steam extraction can be continued at the same level as if all of the gas turbine units were being operated. A comparable solution is disclosed in the document EP 1 701 006 A2. A solution such as this requires additional hardware complexity for the steam lines, the safety valves and the steam bypass lines.

The steam, which is extracted from a combined-cycle power plant and is used for seawater desalination plants with multiple-effect distillation units (MED), normally requires a comparatively low temperature and a low pressure, since the seawater vaporization takes place below atmospheric pressure. Therefore, in a typical plant, the steam is extracted at the outlet from the low-pressure turbine. This configuration promotes high electricity production in the combined-cycle power plant, since the low extraction pressure allows better expansion of the steam in the steam turbine.

An improved type of desalination is known by the name multiple-effect distillation with thermal vapor compression (MED-TCV) (see, for example, WO 2005/105255 A1 in this context). In this method, the multiple-effect distillation is carried out using a thermal compressor (which operates like a conventional steam-jet ejector), in order to feed the steam back from the vaporization cell at the lowest temperature to that at the highest temperature. The operation of the steam-jet injectors leads to a higher-pressure level in the steam extraction line in the combined-cycle power plant. The advantage of this configuration is that less steam is consumed for the same amount of drinking water produced, compared with simple multiple-effect distillation. On the other hand, the higher steam extraction pressure leads to a slight reduction in the electricity production in the combined-cycle power plant.

From GB 1 182 021 A a method for continuous evaporative treatment of a liquid is known, wherein the necessary heat is supplied in a series of evaporation stages. From EP 1 921 281 A1 a seawater desalination apparatus is known using blowout water of a heat recovery steam generator.

### SUMMARY OF THE INVENTION

One object of the Invention is to provide a method for operating a combined-cycle power plant with cogeneration and heat output by steam extraction from the steam turbine, which avoids the disadvantages of known methods and, in particular, allows electricity production and drinking-water production to be decoupled in a simple manner during sea-water desalination, and to specify a combined-cycle power plant for carrying out the method.

The object is achieved by the totality of the features of the claims.

In the method according to the invention, combustion air is inducted in at least one gas turbine, is compressed and is fed to at least one combustion chamber for combustion of a fuel, and the resultant exhaust gas is expanded in at least one turbine producing work, and in which method the exhaust gas which emerges from the at least one turbine is fed through a heat recovery steam generator in order to generate steam, which heat recovery steam generator is part of a water-steam circuit with at least one steam turbine, a condenser, a feedwater tank and a feedwater pump, wherein heat is provided by extraction of steam from the at least one steam turbine. In this method the steam can be selectively extracted from the at least one steam turbine as low-pressure steam or intermediate-pressure steam, and in that the steam extraction is switched from low-pressure steam to intermediate-pressure steam in order to restrict the electricity production.

According to the invention the combined-cycle power plant is associated with a desalination plant, which is operated with the steam extracted from the at least one steam turbine, and in that, the operation of the desalination plant is switched from low-pressure steam to intermediate-pressure steam in order to restrict the electricity production.

The desalination plant comprises desalination units, wherein each desalination unit has a multiple-effect distillation device, which is operated with low-pressure steam, and a thermal vapor compression device, which interacts with the multiple-effect distillation device and is operated with intermediate-pessure steam, and in that the operation of the desalination units is switched from operation without a thermal vapor compression device to operation with a thermal vapor compression device in order to restrict the electricity production while keeping, at the same time, the water production at the nominal value. This embodiment allows minimizing the amount of supplementary firing required and hence the fuel consumption at low power-to-water production ratios of the cogeneration plant.

A further embodiment of the method according to the invention is distinguished in that in order to restrict the electricity production, a portion of the inducted combustion air is additionally passed through the at least one turbine to the heat recovery steam generator without being involved in the combustion of the fuel in the gas turbine, and in that this portion of the combustion air is used to operate at least one supplementary firing in the heat recovery steam generator.

Another embodiment is characterized in that the at least one gas turbine comprises only one combustion chamber and only one turbine for expansion of the exhaust gases, and in that the portion of the compressed combustion air which is not used for combustion of the fuel is passed to the turbine bypassing the combustion chamber.

A further embodiment is distinguished in that the at least one gas turbine is designed for sequential combustion and comprises two combustion chambers and two turbines for the expansion of the exhaust gases, and in that that portion of the compressed combustion air which is not used for combustion of the fuel is provided for operation of the supplementary firing by switching off the second combustion chamber.

Another embodiment of the method according to the invention is characterized in that the at least one gas turbine is provided with variable inlet guide vanes, and in that the inlet guide vanes are set to the maximum opening at the same time that the second combustion chamber is switched off.

Another embodiment is characterized in that a portion of the compressed combustion air additionally bypasses the first combustion chamber.

According to another embodiment, the at least one supplementary firing is arranged at the input of the heat recovery steam generator.

Yet another embodiment is characterized in that the heat recovery steam generator contains a first superheater, and in that a second additional firing is arranged downstream from the first superheater.

The combined-cycle power plant according to the invention for carrying out the method comprises at least one gas turbine with a compressor for compression of inducted combustion air, a combustion chamber for combustion of a fuel using the compressed combustion air, and a turbine for expansion of the exhaust gases created during the combustion, as well as a water-steam circuit with at least one steam turbine and a heat recovery steam generator, through which exhaust gases which emerge from the gas turbine flow, wherein the capability to extract steam is provided in the steam turbine. The at least one steam turbine is designed for selective extraction of steam as low-pressure steam or intermediate-pressure steam.

The combined-cycle power plant according to the invention is characterized in that the combined-cycle power plant is associated with a desalination plant with desalination units, wherein each desalination unit includes a multiple-effect distillation device, which is operated with low-pressure steam, and a thermal vapor compression device which interacts with the multiple-effect distillation device and is operated with intermediate-pressure steam, and in that the desalination units can be selectively switched from operation with low-pressure steam to operation with intermediate-pressure steam. The advantage of coupling the multi-effect distillation device to a thermal vapor compressor lies in the lower consumption of steam at higher pressure necessary in this configuration for producing a given amount of distillate water. Another embodiment is characterized in that a controllable bypass is provided in the at least one gas turbine, via which a portion of the compressed combustion air can be introduced into the turbine bypassing the combustion chamber, and in that a supplementary firing is provided in the heat recovery steam generator, in which supplementary firing fuel can be burnt, in order to heat the exhaust gases as they enter using the combustion air which has been passed via the bypass.

According to a further embodiment, a valve is arranged in the bypass.

Another embodiment of the combined-cycle power plant according to the invention is characterized in that the at least one gas turbine is designed for sequential combustion, and comprises two combustion chambers and two turbines for expansion of the exhaust gases.

Yet another embodiment is characterized in that a first supplementary firing is arranged in the heat recovery steam generator, at the input to the heat recovery steam generator and a second supplementary firing are arranged downstream from a first superheater.

### BRIEF DESCRIPTION OF THE FIGURES

The invention will be explained in more detail in the following text using exemplary embodiments in conjunction with the drawing, in which:
- Figure 1: shows a simplified plant layout of a combined-cycle power plant with a connected desalination plant, according to one exemplary embodiment of the invention;
- Figure 2: shows the exemplary plant layout of a desalination plant, which, within the scope of the invention, can be operated selectively with low-pressure steam or with intermediate-pressure steam;
- Figure 3: shows the gas-turbine part of the plant shown in Figure 1, with an additional bypass for partially bypassing the combustion chamber of the gas turbine, according to another exemplary embodiment of the invention; and
- Figure 4: shows the gas-turbine part of the plant from Figure 1 with sequential combustion, according to a further exemplary embodiment of the invention.

### BEST MODE OF THE INVENTION

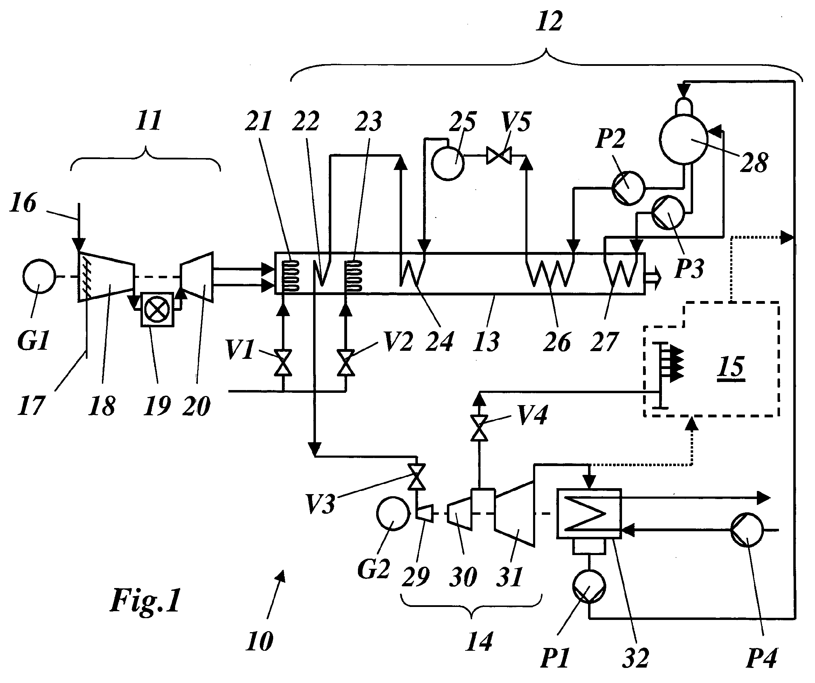

Figure 1 shows a simplified plant layout of a combined-cycle power plant 10 with a connected desalination plant 15 according to one exemplary embodiment of the invention. The illustrated combined-cycle power plant 10 comprises a gas turbine 11, a water-steam circuit 12 and a desalination plant 15. The gas turbine 11, which drives a first generator G1, comprises a compressor 18, a combustion chamber 19 and a turbine 20. The compressor 18 inducts combustion air via an air inlet 16, compresses it and then emits it to the combustion chamber 19, where, together with a fuel which is introduced, it feeds a combustion process which produces hot exhaust gases, which are expanded in the downstream turbine 20, producing work. The amount of the inducted combustion air can be controlled via variable inlet guide vanes 17.

The hot exhaust gas from the gas turbine 11 flows through a heat recovery steam generator 13, which is arranged in the water-steam circuit 12, in order there to convert feed water from a feedwater tank 28 to superheated steam via corresponding economizers 26, 27 and superheaters 22, 24. Appropriate pumps P2 and P3 are provided in order to convey the feed water. Furthermore, a high-pressure drum 25 is provided in a manner known per se, as well as a valve V5 by means of which the inlet flow to the high-pressure drum 25 can be controlled. The high-pressure steam which is generated in the heat recovery steam generator 13 is fed via a valve V3 for the high-pressure turbine 29 to a steam turbine 14, which is arranged in the water-steam circuit and drives a further generator G2, where it is expanded to an intermediate pressure, before entering an intermediate-pressure turbine 30 of the steam turbine 14. The low-pressure steam, which emerges from the intermediate-pressure turbine 30 is then passed through an appropriate low-pressure turbine 31 in order finally to be condensed in a condenser 32 and to be pumped back to the feedwater tank 28 with a condensate. A cooling medium, which is conveyed by means of a further pump P4 flows through the condenser 32.

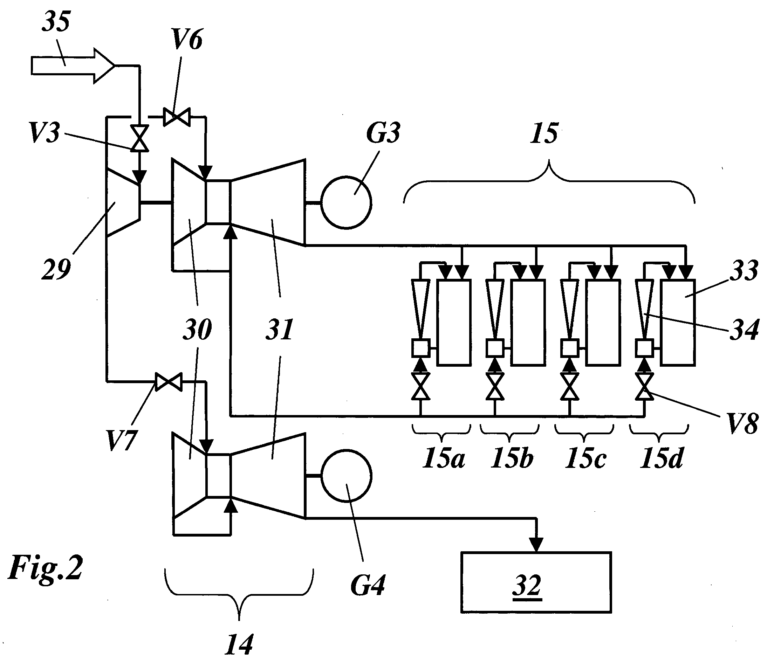

Steam is extracted from the steam turbine 14 via a valve V4 between the intermediate-pressure turbine 30 and the low-pressure turbine 31, and is fed to a desalination plant 15, which, for example, may be designed as shown in Figure 2. The condensate, which is created in the desalination plant 15 is fed back into the circuit via a line, which is shown by dots in Figure 1. Furthermore, low-pressure steam can be extracted at the output of the low-pressure turbine 31 via a further line (see also Figure 2), or extracted from the low-pressure turbine 31, and can be fed to the desalination plant 15 (dotted line in Figure 1). The operation of the desalination plant can be switched between intermediate-pressure steam and low-pressure steam by appropriate operation of the valves V8.

As can be seen from Figure 2, the desalination plant 15 is designed such that, via separate extraction lines, it can be selectively operated with intermediate-pressure steam from the intermediate-pressure turbine 30 or with low-pressure steam from the low-pressure turbine 31. This is achieved by using desalination units 15a-15d in the desalination plant 15, with so-called multiple-effect distillation devices (MED) 33, operating alone or in combination with thermal vapor compression devices (TCV) 34. The multiple-effect distillation devices 33 require low-pressure steam at a pressure 0.5 bar or less, while the thermal vapor compression devices 34 typically require steam at a pressure of 3 bar or higher.

The exemplary embodiment in Figure 2 shows a steam turbine 14 with a common high-pressure turbine 29 and intermediate-pressure and low-pressure turbines 30 and 31, which are arranged in two parallel paths, drive a respective generator G3 and G4 and receive intermediate-pressure steam from the high-pressure turbine 29 via valves V6 and V7, while the high-pressure turbine 29 receives high-pressure steam 35 via the valve V3. The desalination plant 15 is connected to the upper path of the steam turbine 14, with the operation of the thermal vapor compression devices 34 being controlled via appropriate valves V8. The lower path interacts directly with the condenser 32.

As already mentioned, a desalination plant 15 such as this can alternatively be operated in two different operating modes: in one operating mode, the desalination units 15a-15d are operated without the thermal vapor compression devices 34 (valves V8 closed), in order to achieve the maximum electricity production. In the other operating modes, the thermal vapor compression devices 34 are likewise operated (valves V8 open), in order to maintain the production of drinking water while the electricity requirement is low at times or seasonally.

One advantage of this configuration is that the supplementary firing in the heat recovery steam generator, which normally has to be designed for partial load operation of the gas turbine, can be reduced in its size because less steam is required for the desalination of the same amount of water, as a result of the combined operation of multiple-effect distillation devices 33 and thermal vapor compression devices 34. This configuration allows therefore a reduction of the fuel consumption for a given amount of water production at partial load of the turbine.

Two supplementary firings 21 and 23 are provided in the heat recovery steam generator 13 in the plant in Figure 1, one (21) of which is arranged directly at the input of the heat recovery steam generator 13 (so-called "duct firing"), while the second (23) is arranged between the two superheaters 22 and 24 (so-called "inter-bank firing"). Both supplementary firings 21 and 23 are supplied with suitable fuel via appropriate valves V1 and V2.

An operating concept for the gas turbine in a combined-cycle power plant with cogeneration, which results in a large exhaust gas flow from the gas turbine with a low exhaust gas temperature at the same time additionally opens up a wide range for a supplementary firing in the heat recovery steam generator, thus making it possible to ensure a high level of steam production for a connected desalination plant, which is operated using the steam, even when the demand for electricity from the grid is low at the same time. The supplementary firing may in this case be restricted to the input of the heat recovery steam generator (supplementary firing 21), although this restricts the steam production. If, in contrast, a further supplementary firing (23) is provided additionally between the superheaters which are arranged in the heat recovery steam generator, the steam production can be increased considerably, however the steam turbine probably does not need to be switched off, because the temperature level of the steam produced at the output of the heat recovery steam generator is too low.

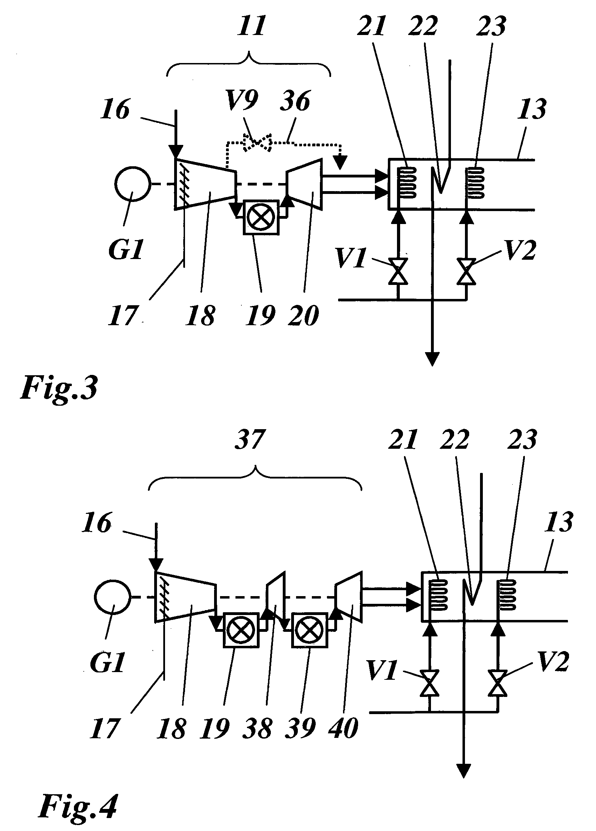

On the basis of the plant illustrated in Figures 1 and 2, it is now additionally possible to provide (see Figure 3) for an adjustable portion of the combustion air which is compressed in the compressor 18 to bypass the combustion chamber 19 and turbine 20 via a bypass 36 which is arranged in the gas turbine 11 and can be controlled by means of a valve V9, as a result of which it is not involved in the combustion in the gas turbine 11. This ensures an unchanged high exhaust gas mass flow even when the load on the gas turbine 11 is relatively low. Such operation leads to a lower exhaust gas temperature, which additionally allows independent control of the steam generation by means of the supplementary firings 21 and 23 in the heat recovery steam generator 13.

At the same time, suitable combustion parameters can be maintained in the combustion chamber 19 because of the reduced combustion airflow, with the consequence that the hazardous-substance emission can be kept low, even when the load on the gas turbine is comparatively low. Since the oxygen content in the exhaust gas of the gas turbine is increased considerably in comparison to conventional operation by bypass operation, the supplementary firing in the heat recovery steam generator 13 can be operated on a large scale without additional external air.

Another option for implementing a comparable method is provided, as shown in Figure 4, for a combined-cycle power plant, which has a gas turbine 37 with sequential combustion. In the case of sequential combustion such as this, as is known by way of example from document EP 1 914 407 A2, two combustion chambers 19 and 39 are connected one behind the other in the gas turbine 37, with a respective downstream expansion turbine 38 and 40. In this case, when the electricity production is restricted, the second combustion chamber 39 is switched off, and the inlet guide vanes 17 are open completely at the same time. This maintains the full exhaust gas mass flow even when the load on the gas turbine 37 is comparatively low, with the first combustion chamber 19 being operated close to its nominal operating point, and the hazardous-substance emissions remaining low.

The resultant exhaust gas temperature is low and, even in this case, allows additional independent control of the steam generation by means of the supplementary firings 21, 23 in the heat recovery steam generator 13. Since the oxygen content in the exhaust gas from the gas turbine is increased considerably in comparison to conventional operation in this type of operation as well, the supplementary firing in the heat recovery steam generator 13 can be operated on a large scale without additional external air.

However, in addition to switching off the second combustion chamber 39, it is also possible to provide a bypass 36 for the first combustion chamber 19, as shown in Figure 3, in order to allow a portion of the compressed air to bypass the first combustion chamber 19. This makes it possible to ensure that the flame temperature in the first combustion chamber 19 can be operated close to the nominal operating point, and that this results in a low exhaust gas temperature with a high mass flow at the same time, as a result of which, as already described above, additional independent control of the steam generation is possible by the supplementary firings 21 and 23.

The two supplementary firings 21 and 23 illustrated in Figure 1 have the advantage that the first supplementary firing 21 can be used to essentially ensure a minimal steam temperature at the output of the heat recovery steam generator 13, in order to keep the steam turbine 14 within its load limits, while the purpose of the second supplementary firing 23 is essentially to produce and to control the desired amount of steam.

### LIST OF REFERENCE SIGNS

- 10: Combined-cycle power plant (with cogeneration)
- 11,37: Gas turbine
- 12: Water-steam circuit
- 13: Heat recovery steam generator
- 14: Steam turbine
- 15: Desalination plant
- 15a-15d: Desalination unit
- 16: Air inlet
- 17: Inlet guide vanes
- 18: Compressor
- 19,39: Combustion chamber
- 20,38,40: Turbine
- 21,23: Supplementary firing
- 22,24: Superheater
- 25: High-pressure drum
- 26,27: Economizer
- 28: Feedwater tank
- 29: High-pressure turbine
- 30: Intermediate-pressure turbine
- 31: Low-pressure turbine
- 32: Condenser
- 33: Multiple-effect-distillation device (MED)
- 34: Thermal vapor compression device (TVC)
- 35: High-pressure steam
- 36: Bypass
- G1-G4: Generator
- P1-P4: Pump
- V1-V9: Valve

## Claims

1. A method for operating a combined-cycle power plant (10) for the generation of electrical energy with cogeneration, in which method combustion air is inducted in at least one gas turbine (11, 37), is compressed and is supplied to at least one combustion chamber (19, 39) for combustion of a fuel, and the resultant exhaust gas is expanded in at least one turbine (20, 38, 40) producing work, and in which method the exhaust gas which is exhausted by the at least one turbine (20, 38, 40) is fed through a heat recovery steam generator (13) in order to generate steam, which heat recovery steam generator (13) is part of a water-steam cycle (12) with at least one steam turbine (14), a condenser (32), a feedwater tank (28) and a feedwater pump (P2), wherein heat is provided by extraction of steam from the at least one steam turbine (14), wherein the steam can be selectively extracted from the at least one steam turbine (14) as low-pressure steam or intermediate-pressure steam, wherein the combined-cycle power plant (10) is associated with a desalination plant (15), which is operated with the steam extracted from the at least one steam turbine (14), and wherein the desalination plant (15) comprises desalination units (15a-15d), wherein each desalination unit (15a-15d) has a multiple-effect distillation device (33), which is operated with low-pressure steam, **characterized in that** the steam extraction is switched from low-pressure steam to intermediate-pressure steam in order to restrict the electricity production, and **in that**, the operation of the desalination plant (15) is switched from low-pressure steam to intermediate-pressure steam in order to restrict the electricity production while keeping the production of distillate water equal or close to the nominal value, and **in that** each desalination unit (15a-15d) further comprises a thermal vapor compression device (34), which interacts with the multiple-effect distillation device (33) and is operated with intermediate-pressure steam, and **in that** the operation of the desalination units (15a-15d) is switched from operation without a thermal vapor compression device (34) to operation with a thermal vapor compression device (34) in order to restrict the electricity production.

2. The method as claimed in claim 1, **characterized in that**, in order to restrict the electricity production, a portion of the inducted combustion air is additionally passed through the at least one turbine (20, 38, 40) to the heat recovery steam generator (13) without being involved in the combustion of the fuel in the gas turbine (11, 37), and **in that** this portion of the combustion air is used to operate at least one supplementary firing (21, 23) in the heat recovery steam generator (13).

3. The method as claimed in claim 2, **characterized in that** the at least one gas turbine (11) comprises only one combustion chamber (19) and only one turbine (20) for expansion of the exhaust gases, and **in that** the portion of the compressed combustion air, which is not used for combustion of the fuel is passed to the turbine (20) bypassing the combustion chamber (19).

4. The method as claimed in claim 2, **characterized in that** the at least one gas turbine (37) is designed for sequential combustion and comprises two, first and second sequentially arranged combustion chambers (19, 39) and two turbines (38, 40) for the expansion of the exhaust gases, and **in that** that portion of the compressed combustion air which is not used for combustion of the fuel is provided for operation of the supplementary firing (21, 23) by switching off the second combustion chamber (39).

5. The method as claimed in one of the foregoing claims, **characterized in that** the at least one gas turbine (37) is provided with variable inlet guide vanes (17), and **in that** the inlet guide vanes (17) are set to the maximum opening at the same time that the second combustion chamber (39) is switched off.

6. The method as claimed in claim 4 or 5, **characterized in that** a portion of the compressed combustion air additionally bypasses the first combustion chamber (19).

7. The method as claimed in one of claims 2-6, **characterized in that** the at least one supplementary firing (21) is arranged at the input of the heat recovery steam generator (13).

8. The method as claimed in claim 7, **characterized in that** the heat recovery steam generator (13) contains a first superheater (22), and **in that** a second additional firing (23) Is arranged downstream from the first superheater (42).

9. A combined-cycle power plant (10) for carrying out the method as claimed in claim 1, which combined-cycle power plant (10) comprises at least one gas turbine (11, 37) with a compressor (18) for compression of inducted combustion air, a combustion chamber (19, 39) for combustion of a fuel using the compressed combustion air, and a turbine (20, 38, 40) for expansion of the exhaust gases created during the combustion, as well as a water-steam circuit (12) with at least one steam turbine (14) and a heat recovery steam generator (13), through which exhaust gases, which are exhausted by the gas turbine (11, 37) flow, wherein the capability to extract steam is provided in the steam turbine (14), wherein the combined-cycle power plant (10) is associated with a desalination plant (15) with desalination units (15a-15d), wherein each desalination unit (15a-15d) has a multiple-effect distillation device (33), which is operated with low-pressure steam, **characterized in that** the at least one steam turbine (14) Is designed for selective extraction of steam as low-pressure steam and **in that** each desalination unit (15a - 15d) has a thermal vapor compression device (34), which interacts with the multiple-effect distillation device (33) and is operated with the extracted intermediate-pressure steam, and **in that** the desalination units (15a-15d) can be selectively switched from operation with low-pressure steam to operation with intermediate-pressure steam.

10. The combined-cycle power plant as claimed in claim 9, **characterized in that** a controllable bypass (36) is provided in the at least one gas turbine (11), via which a portion of the compressed combustion air can be introduced into the turbine (20, 38, 40) bypassing the combustion chamber (19, 39), and **in that** a supplementary firing (21, 23) is provided in the heat recovery steam generator (13), in which supplementary firing (21, 23) fuel can be burnt, in order to heat the exhaust gases as they enter using the combustion air which has been passed via the bypass (36).

11. The combired-cycle power plant as claimed in claim 10, **characterized in that** a valve (V9) is arranged in the bypass (36).

12. The combined-cycle power plant as claimed in claim 10 or 11, **characterized in that** the at least one gas turbine (37) is designed for sequential combustion, and comprises two combustion chambers (19, 39) and two turbines (38, 40) for expansion of the exhaust gases.

13. The combined-cycle power plant as claimed in one of claims 10-12, **characterized in that** a first supplementary firing (21) is arranged in the heat recovery steam generator (13), at the input to the heat recovery steam generator (13) and a second supplementary firing (23) is arranged downstream from a first superheater (22).

## Patentansprüche

1. Verfahren zum Betrieb eines Kombikraftwerks (10) für die Erzeugung von elektrischer Energie mit Kraft-Wärme-Kopplung, wobei in dem Verfahren Verbrennungsluft in mindestens eine Gasturbine (11, 37) angesaugt wird, verdichtet wird und mindestens zu einer Brennkammer (19, 39) zur Verbrennung eines Kraftstoffes zugeführt wird, und wobei das resultierende Abgas in mindestens einer Turbine (20, 38, 40) expandiert wird und Arbeit erzeugt, und wobei in dem Verfahren Abgas, das durch die mindestens eine Turbine (20, 38, 40) abgegeben wird, durch einen Wärmerückgewinnungsdampfgenerator (13) zum Erzeugen von Dampf geleitet wird, wobei der Wärmerückgewinnungsdampfgenerator (13) Teil eines Wasserdampfzyklus (12) mit mindestens einer Dampfturbine (14), einem Kondensator (32), einem Speisewasserbehälter (28) und einer Speisewasserpumpe (P2) ist, wobei die Wärme durch die Entnahme von Dampf aus der mindestens einen Dampfturbine (14) bereitgestellt wird, wobei der Dampf selektiv aus der mindestens einen Dampfturbine (14) als Niederdruckdampf oder Mitteldruckdampf entnommen werden kann, wobei das Kombikraftwerk (10) mit einer Entsalzungsanlage (15) assoziiert ist, die mit dem Dampf betrieben werden kann, welcher der mindestens einen Dampfturbine (14) entnommen wird, wobei die Entsalzungsanlage (15) Entsalzungseinheiten (15a-d) umfasst, wobei jede Entsalzungseinheit (15a-15d) eine Mehrfacheffekt-Destillationsvorrichtung (33) aufweist, die mit Niederdruckdampf betrieben wird,
**dadurch gekennzeichnet, dass** die Dampfentnahme von Niederdruckdampf zu Mitteldruckdampf geschaltet wird, um die Stromerzeugung einzuschränken, und dadurch, dass der Betrieb der Entsalzungsanlage (15) von Niederdruckdampf zu Mitteldruckdampf umgeschaltet wird, um die Stromerzeugung einzuschränken und gleichzeitig die Herstellung von Destillatwasser gleich oder nahe einem Nennwert beizubehalten und dadurch, dass die Entsalzungseinheit (15a-d) ferner eine Wärmedampfverdichtungsvorrichtung (34) umfasst, die mit der Mehrfacheffekt-Destillationsvorrichtung (33) zusammenwirkt und mit dem Mitteldruckdampf betrieben wird und dadurch, dass der Betrieb der Entsalzungseinheiten (15a-d) vom Betrieb ohne Wärmedampfverdichtungsvorrichtung (34) zum Betrieb mit einer Wärmedampfverdichtungsvorrichtung (34) zum Einschränken der Stromerzeugung umgeschaltet wird.

2. Verfahren nach Anspruch 1, **dadurch gekennzeichnet, dass** zum Einschränken der Stromerzeugung ein Teil der eingeleiteten Verbrennungsluft zusätzlich die mindestens eine Turbine (20, 38, 40) zum Wärmerückgewinnungsdampfgenerator (13) durchläuft, ohne an der Verbrennung des Kraftstoffes in der Gasturbine (11, 37) beteiligt zu sein, und dadurch, dass dieser Teil der Verbrennungsluft zum Betreiben mindestens einer Zusatzfeuerung (21, 23) im Wärmerückgewinnungsdampfgenerator (13) verwendet wird.

3. Verfahren nach Anspruch 2, **dadurch gekennzeichnet, dass** die mindestens eine Gasturbine (11) nur eine Brennkammer (19) und nur eine Turbine (20) zur Expansion der Abgase umfasst, und dadurch, dass der Teil der verdichteten Verbrennungsluft, die nicht zur Verbrennung des Kraftstoffs verwendet wird, zur Turbine (20) geleitet wird und die Brennkammer (19) umgeht.

4. Verfahren nach Anspruch 2, **dadurch gekennzeichnet, dass** die mindestens eine Gasturbine (37) zur sequentiellen Verbrennung ausgestaltet ist und zwei, eine erste und eine zweite sequentiell angeordnete, Brennkammern (19, 39) und zwei Turbinen (38, 40) zur Expansion der Abgase umfasst, und dadurch, dass der Teil der verdichteten Verbrennungsluft, die nicht zur Verbrennung des Kraftstoffs verwendet wird, zum Betrieb der Zusatzfeuerung (21, 23) durch Abschalten der zweiten Brennkammer (39) bereitgestellt wird.

5. Verfahren nach einem der vorhergehenden Ansprüche, **dadurch gekennzeichnet, dass** die mindestens eine Gasturbine (37) mit variablen Einlassleitschaufeln (17) bereitgestellt ist, und dadurch, dass die Einlassleitschaufeln (17) eingestellt sind, um eine maximale Öffnung zum Zeitpunkt aufzuweisen, an dem die zweite Brennkammer (39) ausgeschaltet wird.

6. Verfahren nach Anspruch 4 oder 5, **dadurch gekennzeichnet, dass** ein Teil der verdichteten Verbrennungsluft zusätzlich die erste Brennkammer (19) umgeht.

7. Verfahren nach einem der Ansprüche 2 bis 6, **dadurch gekennzeichnet, dass** die mindestens eine Zusatzfeuerung (21) am Einlass des Wärmerückgewinnungsdampfgenerators (13) angeordnet ist.

8. Verfahren nach Anspruch 7, **dadurch gekennzeichnet, dass** der Wärmerückgewinnungsdampfgenerator (13) einen ersten Überhitzer (22) enthält, und dadurch, dass eine zweite Zusatzfeuerung (23) stromabwärts des ersten Überhitzers (42) angeordnet ist.

9. Kombikraftwerk (10) zur Durchführung des Verfahrens nach Anspruch 1, wobei das Kombikraftwerk (10) mindestens eine Gasturbine (11,37) mit einem Kompressor (18) zum Verdichten der eingeleiteten Verbrennungsluft, eine Brennkammer (19, 39) zum Verbrennen eines Kraftstoffes, der die verdichtete Verbrennungsluft verwendet, und eine Turbine (20, 38, 40) zur Expansion der Abgase, die während der Verbrennung erzeugt werden, umfasst, sowie einen Wasserdampfkreis (12) mit mindestens einer Dampfturbine (14) und einem Wärmerückgewinnungsdampfgenerator (13), durch den Abgase, die von der Gasturbine (11, 37) abgegeben werden, fließen, wobei die Fähigkeit zur Entnahme von Dampf in der Dampfturbine (14) bereitgestellt wird, wobei das Kombikraftwerk (10) mit einer Entsalzungsanlage (15) mit Entsalzungseinheiten (15a-d) assoziiert ist, wobei jede Entsalzungseinheit (15a-15d) eine Mehrfacheffekt-Destillationsvorrichtung (33) aufweist, die mit Niederdruckdampf betrieben wird, **dadurch gekennzeichnet, dass** die mindestens eine Dampfturbine (14) zur selektiven Entnahme von Dampf als Niederdruckdampf oder Mitteldruckdampf ausgestaltet ist und dadurch, dass jede Entsalzungseinheit (15a-d) eine Wärmedampfverdichtungsvorrichtung (34) aufweist, die mit der Mehrfach-Effekt-Destillationsvorrichtung (33) zusammenwirkt und mit dem entnommenen Mitteldruckdampf betrieben wird, und dadurch, dass die Entsalzungseinheiten (15a-15d) selektiv zwischen dem Betrieb mit Niederdruckdampf und dem Betrieb mit Mitteldruckdampf geschaltet werden können.

10. Kombikraftwerk nach Anspruch 9, **dadurch gekennzeichnet, dass** eine steuerbare Umgehungsleitung (36) in der mindestens einen Gasturbine (11) bereitgestellt ist, über die ein Teil der verdichteten Verbrennungsluft in die Turbine (20, 38, 40) eingeleitet werden kann, die Brennkammer (19, 39) umgeht, und dadurch, dass eine Zusatzfeuerung (21, 23) in dem Wärmerückgewinnungsdampfgenerator (13) bereitgestellt wird, in dem der Kraftstoff aus der Zusatzfeuerung (21, 23) verbrannt werden kann, um die Abgase bei Eintritt unter Verwendung von Verbrennungsluft, welche durch die Umgehungsleitung (36) geleitet wurde, zu erwärmen.

11. Kombikraftwerk nach Anspruch 10, **dadurch gekennzeichnet**, ein Ventil (V9) in der Umgehungsleitung (36) angeordnet ist.

12. Kombikraftwerk nach Anspruch 10 oder 11, **dadurch gekennzeichnet, dass** die mindestens eine Gasturbine (37) zur sequentiellen Verbrennung ausgestaltet ist und zwei Brennkammern (19, 39) und zwei Turbinen (38, 40) zur Expansion der Abgase umfasst.

13. Kombikraftwerk nach einem der Ansprüche 10 bis 12, **dadurch gekennzeichnet, dass** eine erste Zusatzfeuerung (21) in dem Wärmerückgewinnungsdampfgenerator (13) angeordnet ist, am Einlass zum Wärmerückgewinnungsdampfgenerator (13), und eine zweite Zusatzfeuerung (23) stromabwärts eines ersten Überhitzers (22) angeordnet ist.

## Revendications

1. Procédé d'exploitation d'une centrale électrique (10) à cycle combiné pour la génération d'énergie électrique avec cogénération, de l'air de combustion étant induit au cours dudit procédé dans au moins une turbine (11, 37) à gaz, étant comprimé et étant fourni à au moins une chambre (19, 39) de combustion pour la combustion d'un combustible, et le gaz d'échappement résultant étant détendu dans au moins une turbine (20, 38, 40) produisant un travail, et le gaz d'échappement qui est dégagé par la ou les turbines (20, 38, 40) étant envoyé au cours dudit procédé à travers un générateur (13) de vapeur à récupération de chaleur afin de générer de la vapeur, ledit générateur (13) de vapeur à récupération de chaleur faisant partie d'un cycle eau-vapeur (12) comprenant au moins une turbine (14) à vapeur, un condenseur (32), un réservoir (28) d'eau d'alimentation et une pompe (P2) à eau d'alimentation, de la chaleur étant obtenue par extraction de vapeur à partir de la ou des turbines (14) à vapeur, la vapeur pouvant être extraite sélectivement de la ou des turbines (14) à vapeur sous forme de vapeur à basse pression ou de vapeur à pression intermédiaire, la centrale électrique (10) à cycle combiné étant associée à une installation (15) de dessalement, qui est exploitée avec la vapeur extraite de la ou des turbines (14) à vapeur, et l'installation (15) de dessalement comportant des unités (15a-15d) de dessalement, chaque unité (15a-15d) de dessalement étant dotée d'un dispositif (33) de distillation à effet multiple, qui est exploité avec de la vapeur à basse pression, **caractérisé en ce que** l'extraction de vapeur est basculée de la vapeur à basse pression à la vapeur à pression intermédiaire afin de limiter la production d'électricité, et **en ce que** l'exploitation de l'installation (15) de dessalement est basculée de la vapeur à basse pression à la vapeur à pression intermédiaire afin de limiter la production d'électricité tout en maintenant la production d'eau distillée égale à ou proche de la valeur nominale, et **en ce que** chaque unité (15a-15d) de dessalement comporte en outre un dispositif (34) de compression thermique de vapeur, qui interagit avec le dispositif (33) de distillation à effet multiple et est exploité avec de la vapeur à pression intermédiaire, et **en ce que** l'exploitation des unités (15a-15d) de dessalement est basculée d'une exploitation sans dispositif (34) de compression thermique de vapeur à une exploitation avec un dispositif (34) de compression thermique de vapeur afin de limiter la production d'électricité.

2. Procédé selon la revendication 1, **caractérisé en ce que**, afin de limiter la production d'électricité, une partie de l'air de combustion induit est de plus envoyée à travers la ou les turbines (20, 38, 40) jusqu'au générateur (13) de vapeur à récupération de chaleur sans intervenir dans la combustion du combustible dans la turbine (11, 37) à gaz, et **en ce que** cette partie de l'air de combustion est utilisée pour réaliser au moins une chauffe supplémentaire (21, 23) dans le générateur (13) de vapeur à récupération de chaleur.

3. Procédé selon la revendication 2, **caractérisé en ce que** la ou les turbines (11) à gaz comportent une seule chambre (19) de combustion et une seule turbine (20) servant à la détente des gaz d'échappement, et **en ce que** la partie de l'air comprimé de combustion qui n'est pas utilisée pour la combustion du combustible est transmise à la turbine (20) en contournant la chambre (19) de combustion.

4. Procédé selon la revendication 2, **caractérisé en ce que** la ou les turbines (37) à gaz sont conçues pour une combustion séquentielle et comportent deux première et deuxième chambres (19, 39) de combustion disposées séquentiellement et deux turbines (38, 40) servant à la détente des gaz d'échappement, et **en ce que** ladite partie de l'air comprimé de combustion qui n'est pas utilisée pour la combustion du combustible est fournie pour la réalisation de la chauffe supplémentaire (21, 23) en éteignant la deuxième chambre (39) de combustion.

5. Procédé selon l'une des revendications précédentes, **caractérisé en ce que** la ou les turbines (37) à gaz sont munies d'aubes directrices variables (17) d'entrée, et **en ce que** les aubes directrices (17) d'entrée sont réglées à l'ouverture maximale en même temps que la deuxième chambre (39) de combustion est éteinte.

6. Procédé selon la revendication 4 ou 5, **caractérisé en ce qu'**une partie de l'air comprimé de combustion contourne de plus la première chambre (19) de combustion.

7. Procédé selon l'une des revendications 2 à 6, **caractérisé en ce que** la ou les chauffes supplémentaires (21) sont disposées à l'entrée du générateur (13) de vapeur à récupération de chaleur.

8. Procédé selon la revendication 7, **caractérisé en ce que** le générateur (13) de vapeur à récupération de chaleur contient un premier surchauffeur (22), et **en ce qu'**une deuxième chauffe supplémentaire (23) est disposée en aval du premier surchauffeur (42).

9. Centrale électrique (10) à cycle combiné destinée à réaliser un procédé selon la revendication 1, ladite centrale électrique (10) à cycle combiné comportant au moins une turbine (11, 37) à gaz dotée d'un compresseur (18) servant à la compression d'air de combustion induit, une chambre (19, 39) de combustion servant à la combustion d'un combustible à l'aide de l'air comprimé de combustion, et une turbine (20, 38, 40) servant à la détente des gaz d'échappement créés pendant la combustion, ainsi qu'un circuit eau-vapeur (12) doté d'au moins une turbine (14) à vapeur et d'un générateur (13) de vapeur à récupération de chaleur, à travers lequel s'écoulent des gaz d'échappement qui sont dégagés par la turbine (11, 37) à gaz, la capacité d'extraire de la vapeur étant incorporée dans la turbine (14) à vapeur, la centrale électrique (10) à cycle combiné étant associée à une installation (15) de dessalement dotée d'unités (15a-15d) de dessalement, chaque unité (15a-15d) de dessalement étant dotée d'un dispositif (33) de distillation à effet multiple, qui est exploité avec de la vapeur à basse pression, **caractérisé en ce que** la ou les turbines (14) à vapeur sont conçues pour une extraction sélective de vapeur sous forme de vapeur à basse pression ou de vapeur à pression intermédiaire et **en ce que** chaque unité (15a-15d) de dessalement est dotée d'un dispositif (34) de compression thermique de vapeur, qui interagit avec le dispositif (33) de distillation à effet multiple et est exploité avec la vapeur extraite à pression intermédiaire, et **en ce que** les unités (15a-15d) de dessalement peuvent être sélectivement basculées d'une exploitation avec de la vapeur à basse pression à une exploitation avec de la vapeur à pression intermédiaire.

10. Centrale électrique à cycle combiné selon la revendication 9, **caractérisée en ce qu'**une dérivation commandable (36) est aménagée dans la ou les turbines (11) à gaz, par l'intermédiaire de laquelle une partie de l'air comprimé de combustion peut être introduite dans la turbine (20, 38, 40) en contournant la chambre (19, 39) de combustion, et **en ce qu'**une chauffe supplémentaire (21, 23) est disposée dans le générateur (13) de vapeur à récupération de chaleur, du combustible pouvant être brûlé dans ladite chauffe supplémentaire (21, 23), afin de chauffer les gaz d'échappement à mesure qu'ils entrent en utilisant l'air de combustion qui a transité par la dérivation (36).

11. Centrale électrique à cycle combiné selon la revendication 10, **caractérisée en ce qu'**une vanne (V9) est disposée dans la dérivation (36).

12. Centrale électrique à cycle combiné selon la revendication 10 ou 11, **caractérisée en ce que** la ou les turbines (37) à gaz sont conçues pour une combustion séquentielle et comportent deux chambres (19, 39) de combustion et deux turbines (38, 40) servant à la détente des gaz d'échappement.

13. Centrale électrique à cycle combiné selon l'une des revendications 10 à 12, **caractérisée en ce qu'**une première chauffe supplémentaire (21) est disposée dans le générateur (13) de vapeur à récupération de chaleur, à l'entrée dans le générateur (13) de vapeur à récupération de chaleur et **en ce qu'**une deuxième chauffe supplémentaire (23) est disposée en aval d'un premier surchauffeur (22).
